# EUROPEAN PATENT APPLICATION

(11) **EP 1 462 949 A1**
(43) Date of publication of application: **29.09.2004**
(21) Application number: 03006527.0
(22) Date of filing: 22.03.2003
(51) Int. Cl.: G06F 17/30

(54) **A system and method relating to access of information**

(71) Applicant: Cegumark AB, 400 14 Göteborg (SE)
(72) Inventor: Yeung, Peter, 16441 Kista (SE)
(74) Representative: Cederbom, Hans Erik August

(57) **Abstract**

The present invention relates to a system (a node, an arrangement) for, in an environment comprising distributed applications and service/information/content providers or information holding means, providing communication between a requesting system with a protocol supporting a generic markup language and an information holding means. A distributed application comprises, or is associated with, means for transforming/converting a request in the form of a document, in the generic markup language, to an information holding means, to an access request using an access protocol for access of the information holding means associated with a pointer to a location in the document in the generic markup language representing the request. Said information holding means access request is invoked as a conventional query to the information holding means, and said transforming/ converting means returns the reply related to the information holding means access request to the appropriate location in the request document, as given (indicated) by the pointer, such that data can be obtained from the information holding means independently of the structure and content of the information holding means.

## Description

### FIELD OF THE INVENTION

The present invention relates to a system and a method respectively for providing communication between a system with a protocol supporting a generic markup language and an information holding means, or service/information/content providers, in an environment with distributed applications. Particularly it relates to access of information in an information holding means in a privacy protection network.

### STATE OF THE ART

There is no satisfactorily functioning technique known for the situation when an information requesting side requests access to information residing on an information providing side, or when an application requests information from a providing side, particularly not for queries to dynamic information. All known techniques strongly depend on the implementational structures, such as used tables, of the information holding means comprised by, or associated with, an application. SQL (Structured Query Language) is one such technique which is particularly suitable when one or more pieces of information, which match a specific, given criterion, are to be searched for. SQL requires input data which is highly specified, presupposing a good knowledge of the structure of databases and relations. It is not possible to dynamically, using dynamical input parameters, get the appropriate dynamical answer, particularly not back to the appropriate location. Generally, when access to information is requested over an IP-based data communication network, several TCP (Transmission Control Protocol) connection setups are required. Particularly, known systems cannot readily be adapted to also satisfy the needs of an end user to protect data contained in personal profiles located throughout a network, at different application or information providing sites. Generally there is no satisfactory solution for, particularly in an environment with distributed applications, accessing information from an information holding means without the application having knowledge of, and being adapted to, the structure and content of the particular information holding means. It is known to solve this problem by using hardcoded links between accessing system and the information holding means. However, from a commercial point of view, solutions with hardcoded links are disadvantageous. It is difficult, or impossible, to make changes without involving a SW (software) programmer. This problem is particularly apparent when an information structure, in e.g. a database, changes frequently, since then software development will have to be extensive. If the company running the application is not a SW company, it will be expensive to always have to employ a SW programmer, or in other terms to provide a SW integrator with a global support organization. This is not financially viable. It is also a problem, hitherto solved through the implementation of hardcoded links, that an application might need to be customized to many different database structures with different content. Particularly it is a problem to connect or associate a reply fetched from e.g. a database with a "location" in a request document, or a query. It is generally easy to return the reply to the document, but there is so far no solution as to how to associate it with the appropriate "location" of the relevant query. Particularly there are no solutions to the problems referred to above when advantage is taken of the use of a generic markup language, e.g. XML, in which case the links between e.g. an XML DOM node tree (query) and database are hardcoded SQL statements, which as referred to above is disadvantageous.

Particularly, there is also actually no simple way for an end user to control which information that should be released to whom etc. in a user friendly way. Also, more generally, there is no simple and user friendly procedure known through which dynamic information or messages can be exchanged between two applications. There is also no satisfactorily functioning solution available for inter-business communication when there is a desire not to reveal the structure etc. of used databases.

### SUMMARY OF THE INVENTION

It is therefore an object of the invention to provide a system and a method respectively through which access of information holding means, e.g. databases, can be provided for without having to rely on hardcoded links between accessing application and e.g. the database, and independently or irrespectively of, in a generic, standard way, which is the structure and the content of the particular information holding means.

It is also an object of the invention to provide a solution through which answers to queries can be returned to the appropriate location in a request document, when using a generic markup language, in an easy and straightforward way. Particularly, it is an object to provide a solution according to which the interface to an information holding means can be adapted in a standardized way without requiring knowledge of the software development of the information holding means.

What is needed is also an arrangement capable of efficiently handling exchange of information/messages between an information requesting side and an information providing or holding side. An arrangement is also needed which functions independently of implementation, structure and relations of any information holding means. An arrangement is also needed which is easy to use and which is uncomplicated as to its functioning. An arrangement is particularly needed, which can be used for queries relating to dynamic information. Most specifically an arrangement as referred to above is needed which duly can take personal privacy into consideration, i.e. which at the same time may support control of access to data within end user personal profiles.

A system and a method respectively as initially referred to are therefore suggested, having the characteristics of the independent claims. Advantageous embodiments are given by the appended subclaims. A system is here also to be interpreted as an arrangement, or a node.

### BRIEF DESCRIPTION OF THE DRAWINGS

The invention will in the following be further described, in a non-limiting manner, and with reference to the accompanying drawings, in which:
- Fig. 1: very schematically illustrates a system requesting information via an application from an information holding means,
- Fig. 2: schematically illustrates an application requesting information, using XML, from a providing application which converts the request for communication with the information holding means holding the information,
- Fig. 3: shows another embodiment in which an XML form is used for requesting and providing data and wherein agreement information is stored externally,
- Fig. 4: shows an embodiment in which validation is performed by means of a personal profile protection network,
- Fig. 5: shows a flow diagram describing the flow when the request comprises an XML form which is implemented as a DOM node tree object,
- Fig. 6: is a block diagram schematically illustrating the inventive concept when the request document is implemented as an XML DOM node tree,
- Fig. 7: is a somewhat more detailed illustration of the procedure for getting information from an information holding means,
- Fig. 8: is an illustration of the procedure for setting information in an information holding means,
- Fig. 9: is a simplified flow diagram illustrating the main functional steps for implementing the inventive concept, and
- Fig. 10: is a flow diagram illustrating one implementation of the inventive concept.

### DETAILED DESCRIPTION OF THE INVENTION

First, a few concepts used in this description will be briefly explained. A requesting system may here be seen as a requesting and/or a providing application.

In a most advantageous implementation the generic markup language is XML (Extensible Markup Language). An agreement between two parties particularly comprises a DTD (Document Type Definition) and it will in the following be referred to as a DTD agreement, i.e. an agreement specifying which data or what kind of data being allowed to exchange between the two parties. A form can particularly be used for requesting purposes, which form may comprise an XML (node) tree tagged with information about data to be "set" or "get", and the requested data itself, if applicable.

A DTD describes a model of the structure of the content in an XML document. The model specifies the elements which have to be provided, which elements that are optional, which their attributes are and how they could be structured in relation to each other. As a comparison, HTML (Hyper Text Markup Language) only has one DTD; by using XML, it becomes possible to create proprietary DTD:s for the user applications which provide full control of the process of controlling the content and structure of an XML document created for an application. A DTD is associated with an XML document by means of a document type declaration. A Document Type Definition, DTD, is here an XML description of the content model of the types (or classes) of the documents. A document type declaration is a submission in an XML file to explain that a certain DTD belongs to a document.

Particularly the form comprises an XML (node) tree with queries for example in the form of attributes which may be given values as the form is filled in. In a particular implementation the attributes comprise one or more of "from", "get", "null", "error", "set", the significance of which should be clear from the reading.

In one implementation the tagged XML form comprises an XML string. In an advantageous implementation the tagged XML form comprises an XML object (a DOM node tree object). DOM is an abbreviation of Document Object Model as defined by W3C, World Wide Web Consortium. DOM is a standardized tree based application programming interface (API) for XML. The object form presupposes the provisioning of transforming/parsing means in the respective applications, i.e. in the requesting application and the information providing application, for transforming XML objects to XML strings using an XSL transformation style sheet (XSLT) and to parse an XML string to an XML object. In particular implementations server means are associated with the requesting and providing applications respectively. An XML string is "visible" to the user, i.e. it can be read, as opposed to the XML object which is "invisible", i.e. not readable.

According to the invention a (providing) application comprises means for converting a received XML form query to a database call, e.g. of SQL format, to fetch the requested information, which, when retrieved is entried/filled in on the form for retransmittal to the requesting application (if it is a pull or "get" (retrieve) operation). An application may particularly function both as a requesting and a providing application. However, for a pair of applications, an agreement may also be based on the assumption that one of the applications always acts as a requester and the other always acts as a provider, or holder. It should be clear that the invention is not limited to implementation of SQL, on the contrary, any access protocol or language for access of an information holding means may be used, e.g. LDAP (Lightweight Directory Access Protocol) or any other similar protocol.

The XML request, e.g. an XML form, is entirely independent of the structural implementation of any information holding/providing means, e.g. a database or similar, as well as of any application.

In an advantageous implementation validating means are provided for validation of a request. The validating means may comprise end user controlled, user specific DTD:s stored in agreement information storing means. A filled-in XML form from a requesting application may be validated against the appropriate end user specific DTD to establish whether the request is allowed or not.

According to one embodiment each service offered by the system to information-requesting applications is assigned a unique DTD (Document Type Definition). DTD can be said to consist of rules controlling the communication between e.g. a requesting side and a providing side by defining which data that is allowed to be transferred between the two parts or sides, and the associated data to be transferred.

Each information-providing application will agree with a central server means on a "general DTD". This embodies the maximum number of data fields the information-providing party will release. Specific end users may, by interacting with the central server means, create user-specific DTDs and thereby reduce the data allowed to be released pertaining to their IDs. Furthermore, the central server means offers "general DTDs" to information-requesting applications to describe what a particular service offers, prior to any end user-specified reductions of data to be released.

Particularly a "general" or basic DTD is given for the agreement, which may be used to build a basic XML form. Such a basic DTD may be applicable for exchange of information between applications relating to similar services, i.e. the same basic XML form may be used for a first application exchanging information with several second applications of the same type or category. In case validation is implemented, the DTD should be transmitted with the XML form, otherwise the inclusion of the DTD may be optional. Also for validation procedures it is however not always mandatory to include the DTD.

In a most advantageous implementation, including validation, access means (e.g. plug-in server means) are provided in, or associated with, the respective requesting and providing applications. These access means are in communication with one or more central protection server means, and together therewith they constitute a personal protection profile network. The central protection server means comprises, or communicates with, personal protection profile holding means. Particularly the personal protection profile holding means holds end user unique protection profiles specifying which data within personal profiles that should be accessible/non-accessible to which applications. The end user protection profiles are preferably end user controlled and comprise user specific DTD:s.

Particularly an application and its associated access means communicate by means of XML objects in XML transport objects, e.g. an XML node tree in an XML node tree container, e.g. using RMI (Remote Method Invocation) or CORBA™. The access means associated with a requesting application will particularly find a user specific DTD, i.e. a personal protection profile, in the central protection server means using information about the general agreement (general or basic DTD) provided from the requesting application. A filled-in XML form is validated against the user specific DTD.

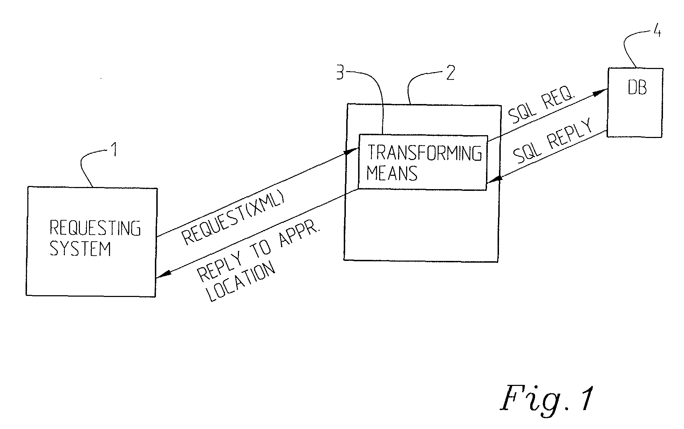

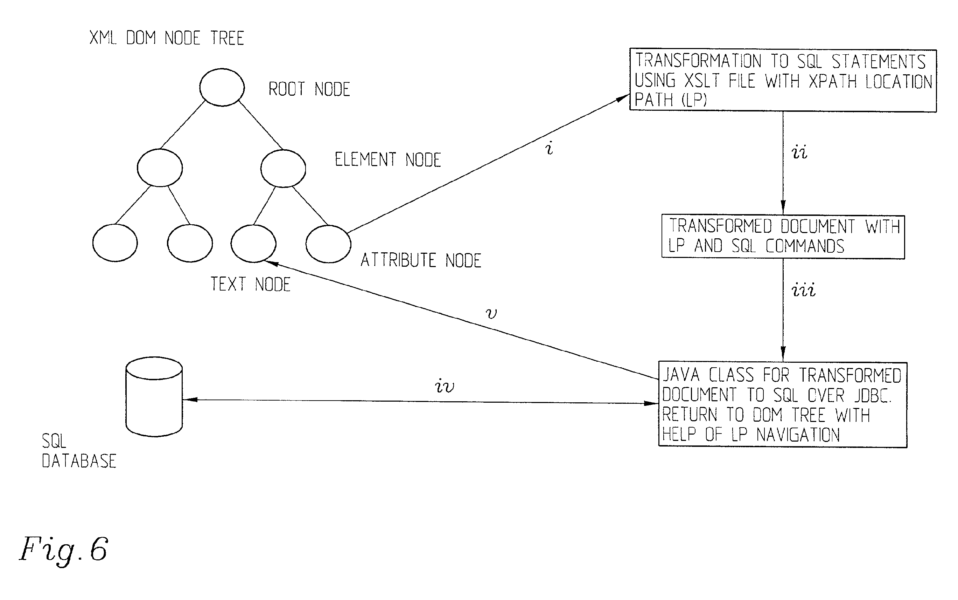

Fig. 1 merely in a schematical way shows a (foreign) system, or a node 1, supporting XML, and providing a request to an application 2 in a distributed environment, which comprises transforming means 3, e.g. a component, for transforming the request to e.g. an SQL request, e.g. a DB call (or more generally an access request for access to the information holding means), retrieves the information, and returns it to the appropriate location/node in the (XML) request (of e.g. an XML DOM node tree) as will be more explained, particularly with reference to Figs. 6-8.

Although in the following it is mostly referred to an SQL request, it should be clear that e.g. LDAP or similar could be used.

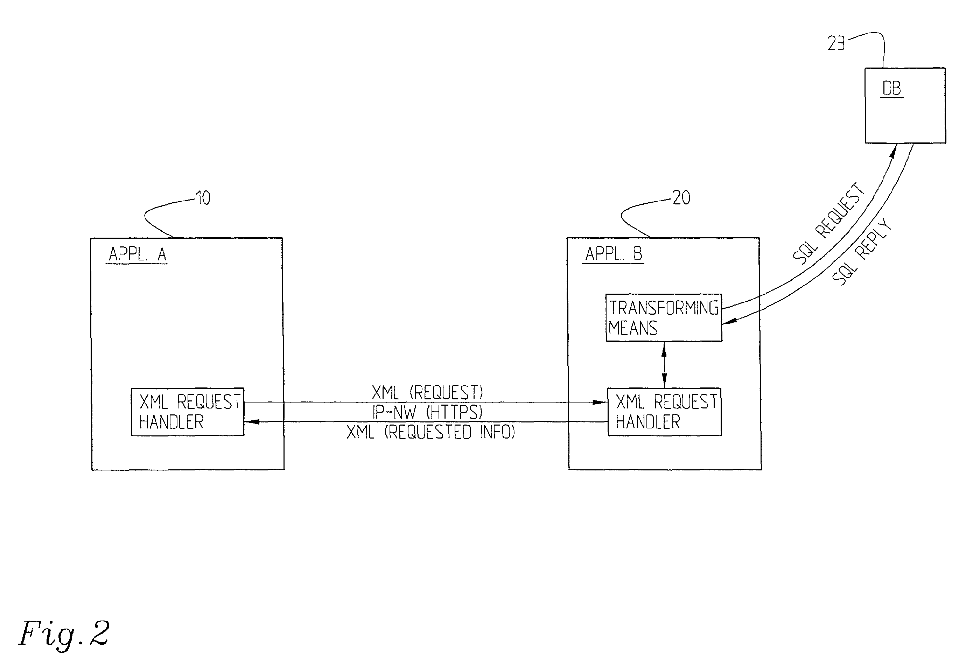

Fig. 2 very schematically illustrates two communicating applications, here denoted information requesting application A 10 and information providing application B 20. Each application 10,20 may comprise or communicate with agreement holders (not shown) for holding information about agreements established between the respective applications. It may thus be supposed that an agreement between two applications, here applications A and B, is stored in both respective applications. The agreement holder of an application, if implemented, may comprise a plurality of different agreements, e.g. one for each other application with which the concerned application has concluded an agreement, and defining which, or what type of, information that is allowed to be exchanged between the respective pair of applications. In the figure it is illustrated that each respective application comprises an XML request handler, which actually comprises software (i.e. not necessarily specific means), for creating an XML form to be filled in when a request is sent. In this first embodiment it is supposed that application A 10 requests information from application B 20.

It should be clear that the inventive concept is not limited to XML "forms", and it does also not have to be a requesting and a providing application, the main concept dealing with the procedure between (here) application B, i.e. any distributed application and information holding means (DB), 23.

An agreement established between applications A and B, as available in an agreement information holder (not shown), particularly in the form of a DTD (Document Type Definition) agreement, is used by the XML form handling functionality to create an XML form, e.g. in the form of an XML DOM node tree, with queries in the form of attributes to be given values in accordance with the specific request. Thus, when an XML form has been created, the attributes are given values, and the XML form tagged with information (in the attributes and element data), relating to the requested information, is transferred to application B 20 over an IP network, e.g. using HTTP(S), as an XML transport file, e.g. as an XML string.

In a preferred implementation the XML node tree comprises an XML DOM node tree. Alternatively the XML tree is implemented as an XML string. If the XML form is built as an object, transformation to an XML transport string is required for purposes of transportation. The XML form received in application B 20 be will transformed to a database call, here particularly in a transforming means. Particularly it is transformed to an SQL request, to access/fetch the data as indicated by the query from a database 23 holding the requested information. When the requested information has been retrieved from database 23, the form is filled in, particularly by giving the attributes and element data the appropriate values, i.e. according to the invention as retrieved from database 23. If the request instead concerns setting of data, the "requested" data is accessed by means of e.g. SQL, and data according to the attributes is set.

The completed XML form is then returned to application A 10, and the form as filled-in may be presented to the user. Figure 2 is merely a schematical illustration of the functioning, wherein an XML form is given which comprises attributes to be given values both to define which information that is requested (for setting or getting purposes) and to contain the requested information (if relevant) when returned to requesting application. If the XML form is implemented as a string, no transformation/parsing means are required, except for the transformation (conversion) to a database call (SQL request). If however the XML form is represented in the form of an XML DOM node tree, transformation means are required for purposes of transportation between the applications (and parsing means for transforming the form in string format to a DOM node tree). This invention is particularly concerned with the transformation to an SQL request, and returning the reply to the appropriate location in the request document, e.g. a node of an XML node tree.

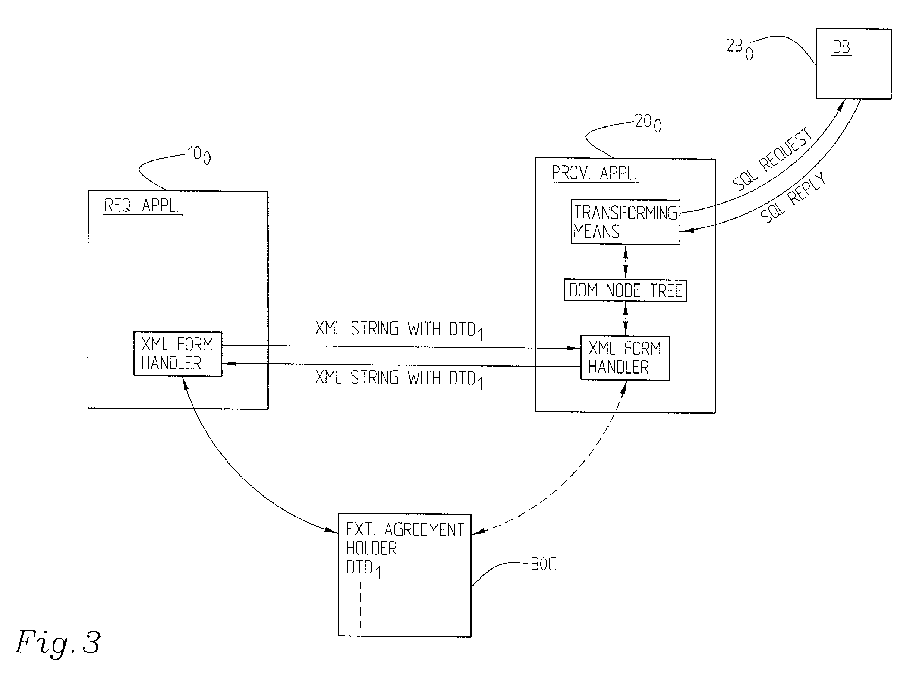

Fig. 3 schematically illustrates a somewhat different implementation in which a requesting application 10₀ requests information from a providing application 20₀, between which applications 10₀, 20₀ an agreement has been established. It is here supposed that agreement information is stored in external agreement holder 30C in communication with both the requesting application 10₀ and the providing application 20₀. Communication between the agreement holder 30C and the providing application 20₀ is here indicated through a dashed line, since when requesting application 10₀ requests information from the providing application (or wants to access data on the providing/holding side), 20₀ there is no need for the providing application 20₀ to fetch the agreement (at least not when no validation is required, but also then it is not absolutely necessary according to advantageous implementations). It is here supposed that agreements have been created in the form of Document Type Definitions DTD. It is supposed that the agreement between requesting application 10₀ and providing application 20₀ here is denoted DTD₁. When application 10₀ wants to get information from application 20₀, DTD₁ is fetched and an XML DOM node tree object (or an XML string) is built in XML form handler in requesting application 10₀. The attributes in the XML node tree are given values (assigned) relating to requested data. Examples on attributes are "from", "get", "set", "null", "error".

In this application all embodiments are described with reference to implementations for retrieving (pulling) data from the providing side. The inventive concept is of course also applicable to the concept of pushing data, i.e. for setting data on a providing side or in an information holding site.

The XML form, if it is in form of a string, is, when the attributes have been given the appropriate values, transferred to the providing application 20₀ as an XML string, optionally including DTD₁. In the providing application 20₀, in transforming means, i.e. software which not necessarily has to be provided in a "means", a transformation is performed to a database call, of SQL format, which call is forwarded to the database 23₀. The requested data is subsequently returned to the providing application, and filled in on the XML form as values on the concerned attributes and element data. The form is returned to the requesting application as an XML string (optionally with a DTD included; DTD₁ in this particular case). In one advantageous implementation the XML tree form is implemented as an XML DOM node tree object. The object has to be converted to a string for transportation from requesting application A 10₀ to providing application B 20₀. The XML string is parsed on the providing side by means of the DOM parser to be in object form. However, for retransmittal to the requesting application, the XML DOM node tree has to be transformed to an XML node string.

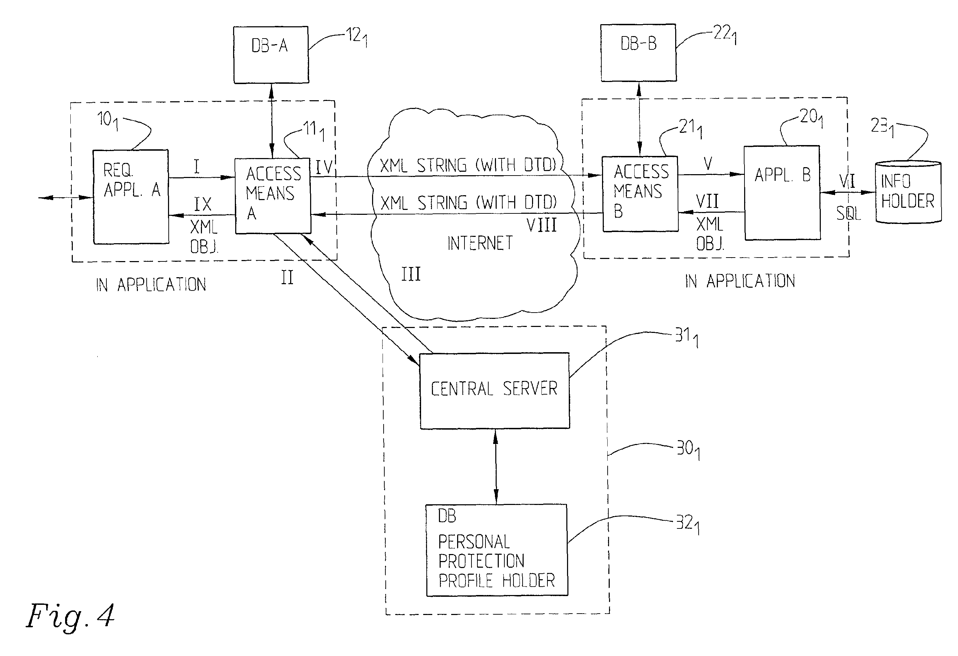

Fig. 4 describes a specific implementation including a validation procedure as described in the patent application "A SYSTEM AND A METHOD RELATING TO ACCESS CONTROL", Patent Application No. 09/976,500, filed in the US on October 12, 2001 and the content of which herewith is incorporated herein by reference. With reference to Fig. 3 it is supposed that an information requesting application 10₁ wants to pull (get) information from an information providing application 20₁, without knowing where to find the information itself. In this implementation it is supposed that communication with the central server means 31₁ is provided by the access means 11₁ interfacing the requesting application 10₁. The advantage of such an implementation is that a fast response is obtained from the privacy network, i.e. from the central server means 30₁, as to whether the requested transaction is possible, without even having to involve the access means 21₁ of the information providing application 20₁ (or the information providing application itself). The load resulting from rejected transactions on the access means 21₁ on the information providing side will be considerably reduced as compared to a case when the providing side is involved at an early stage.

Thus, when the information requesting application 10₁ wants to set information in, or get information from, an information provider, or holder, the requesting application 10₁ makes an XML request towards "its" access means 11₁. The requesting application does not know the address of the information provider. It is further supposed that access means 11₁ holds a public key and a private key. The private key PKI (Private Key Infrastructure) of a node may e.g. be stored as a key object, e.g. a secured object file.

In a particular implementation the request is sent (I) over RMI, and it preferably contains:
- the user identity (ID) associated with the request and used by the requesting application,
- a DTD ID (equivalent of a service ID)
- a Transaction ID,
- an ID of the Requesting Application,
- a Gateway ID, and
- an XML Node Tree Container.

The XML Node Tree Container contains an XML (node) tree tagged with which information the requesting application wants to get or in which personal data fields he wants to set data, update data etc. The tagged XML (node) tree is e.g. described as a form, an XML node tree form.

The XML Node Tree Container is an object for transportation of the XML Node Tree between the requesting application and its access means 11₁. I indicates a request from the requesting application 10₁ to the access means 11₁. Access means 11₁ finds the general DTD; i.e. a DTD not yet tailored to specific end user preferences on the transfer of personal data, the general XSLT file, the Public Key of the central server means, DNS (Domain Name Server) names and IP addresses (one or more IP number based URLs from the main central server means for the DTD ID, in case there are more than one central server means each having an ID).

In one implementation it may be an option to look up a specific central server means ID, if it is specified in the database (DB-A 12) with a specific central server means public key. This may be used when the central server means is not one in the cluster with the same public key, but e.g. one which uses the same domain name. The relevant information for central server means ID, DTD information etc. is fetched by the access means 11₁ from the associated database 12₁.

The access means 11₁ of the requesting application 10₁ then sends the request on, II, to the central server means 30₁ to find the specific DTD for this particular service and end user ID. Particularly HTTPS is used, and the request particularly comprises:
- the identity of the requesting application access means 11₁,
- the digital signature of the requesting application access means with its private key,
- the end user ID used by the requesting application 10₁,
- the DTD ID (equivalent of a service ID),
- the Transaction ID,
- Gateway ID, and
- the requesting application ID.

A response is then awaited and expected from the central server means 30₁ by the access means 11₁. Meanwhile the access means 11₁ of the requesting application may optionally validate the XML node tree with the general DTD for the DTD ID (Service ID). This constitutes a basic validation and it is done the first time the DTD is used, from the time that the server is up and running in order to limit the load on the requesting application access means 11₁.

The central server 31₁, which comprises control logic, checks the authentication of the request including the identity of the access means, the IP address (optionally) and the digital signature against the public key of the access means 11₁. The requesting application user ID and the DTD ID are then mapped onto the information providing application user ID. It should be noted that the end user identity used by a requesting application can be, or normally is, different from the end user identity used by an information providing application. I.e. for one and the same end user the applications can use different ID's.

The information providing application 20₁ user ID is encrypted with date/time using the public key of the access means 21₁ of the information providing application 20₁, such that it only can be read and understood by the information providing application access means 21₁. The encrypted pattern should be different every time the access means 11₁ of the requesting application 10₁ makes a request. The central server 31₁ gets a digital signature for the end user specific DTD from the database holding protection profile information 32₁, signed with the private key of the central server means 31₁. To obtain a good performance, all DTDs may be signed in advance. "Out of band" information elements are also signed. (By "out of band" information is here meant the systems level communication layer, e.g. including control information for the access means. This can e.g. be implemented as HTTP POST in the forward direction and as a cookie in the backward direction.)

The central server means 31₁ then returns messages, III, to the requesting application access means 11₁ containing the end user specific DTD as in-band information. (By "in-band" is here meant information at the application data communication layer, e.g. at XML document level.) The central server means 31₁ also returns "out of band" information such as:
- the digital signature of the end user specific DTD,
- the digital signature of the central server means "out of band" information,
- the identity of the central server means,
- the encrypted end user ID, i.e. the information providing application end user ID,
- time to live,
- inactivity time,
- response time,
- the domain name of the access means 21₁ of the information providing application 20₁,
- its IP address, and
- the public keys of the respective access means 11₁, 21₁.

The transaction ID from the requesting application 10₁ (via its access means 11₁), the user ID of the requesting application, 10₁ and the encrypted user ID of the information providing application will be logged in the central server means 30₁.

In the access means 11₁ of the requesting application 10₁, the digital signature of the central server means 31₁, with its public key, is authenticated. The requesting access means 11₁ will perform a transformation of the XML node tree to an XML transport file (string) with the general XSLT file (the XSLT file for that particular DTD ID) (XSL Transformation; XSL is e.g. described in XSL Transformations (XSLT) Version 1.0, W3C Rec. dated 10 November 1999 and XSL Transformations (XSLT) Version 1.1 W3C Working draft, 12 December 2000, which documents herewith are incorporated herein by reference).

The requesting application access means 11₁ validates the XML transport file (string) against the received end user specific DTD. Next the XML-file will be signed. If there is a request for something, via an XML attribute, for which access is not allowed, an error message will be returned to the requesting application 10₁ by one of the access means 11₁; 21₁.

If however the validation can be completed without errors, the requesting application access means 11₁ sends, to the access means 21₁ of the information providing application, IV,:
- the XML transport (string) (as in-band information) and out of band information, e.g. in the form of a Cookie, i.e. the digital signature for the XML transport file (string) with the private key of the access means 11₁,
- the digital signature of the out of band information (the server ID), from the central server means 30₁,
- encrypted end user ID (user ID of the information providing application),
- time to live,
- inactivity time,
- response time,
- the validation of the information providing side,
- DTD ID, and
- the public keys of respective access means 11₁, 21₁.

Not all digital signatures are necessary, some of them may be optional, depending on the degree of security that is demanded.

The requesting application access means 11₁ here uses HTTPS for communication with the access means of the information providing side, (IV).

If the requesting application access means 11₁ does not receive any response from the access means 21₁ of the information providing application within a predetermined time interval, the requesting application access means 11₁ will disconnect the (TCP; Transmission Control Protocol) connection. It will also empty the session data after a predetermined number of attempts to get a response from one and the same access means on the information providing side. Possibly it will be done after one or more attempts on other access means of the information providing application, in case there is for example a cluster, multiple access means or duplicated access means or similar.

When the information providing application access means 21₁ receives the request, (IV), it retrieves, using the DTD ID:
- the public key of the central server,
- the ID of the central server and the general DTD, and,
- the general XSLT file for the particular DTD ID from its database 22₁.

The digital signature by the requesting side access means 11₁ of the XML transport file is verified against the public key of the requesting side access means from out of band information (DTD ID, central server ID and central server 31₁ signature of the out of band information against the database 22₁). The XML request is validated against the end user-specific DTD from the central server 31₁. If the request is invalid, an error message is returned to the access means 11₁. If the request is valid, the information providing side user ID is decrypted. If the session on the providing side is still active, or ongoing as given by the out of band information, then there is no need for a decryption of the information providing side user ID, since the session is still alive in a decrypted form. The XML file is then parsed to an XML node tree and, here, information providing application 20₁ is invoked by sending the XML node tree container, a generated transaction ID, ID of the DTD over RMI. Every new DTD ID may be validated by the information providing side access means 21₁ against the general DTD each time the server is activated. This general DTD represents the maximum data elements the information providing application is prepared to release - or to have modified, in the set "push" case.

For the particular session, and in communication with the information providing application 20₁, the access means 21₁ will use the out of band parameter time to live (or inactivity time), V.

The information providing application 20₁ then checks what information should be get or set from the XML node tree form and sends a response, VII, to the corresponding access means 21₁ containing an XML node tree filled with the requested information, and also information about completion status. The XML node tree is returned from the information providing application 20₁, after fetching information, VI, from information holder 23, back to the respective access means 21₁ in an XML node tree container.

The information providing application access means 21₁ then transforms the XML node tree received from the application 20₁ to an XML transport file with the general XSLT file for that DTD ID. An answer is then sent over HTTPS with the new XML transport return file to the access means 11₁ of the requesting application 10₁, VIII.

VI relates to the inventive transformation to an SQL request, and the returning of the information, reply, to the appropriate location/node as will be more thoroughly described below.

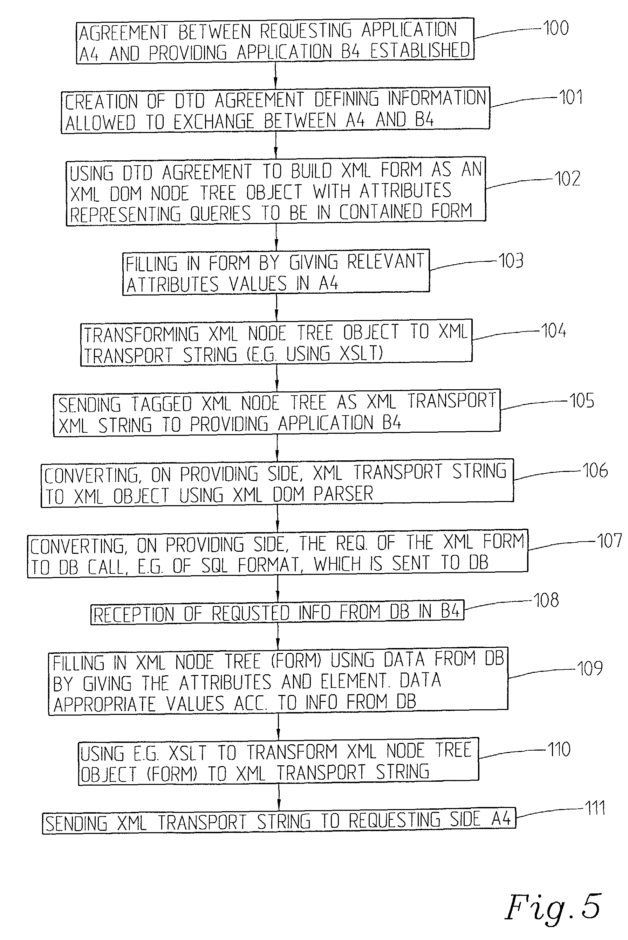

In the flow diagram of Fig. 5 it is schematically illustrated how an XML form is used to request and provide data. In this implementation the object form of XML is implemented.

It is first, 100, supposed that a general agreement (general DTD) between requesting application A4 and providing application B4 is established. (Of course an agreement may already be available, and may have been established at an earlier stage, this is not relevant for the functioning of the application, in this implementation, however, there is an established agreement). Using the general agreement, a DTD agreement is created defining which information it is allowed to exchange between A4 and B4, 101. As in the preceding step, a DTD agreement (DTD ID) may already be available. It should be clear that the inventive concept does not rely on the establishment of any agreements, this merely relates to specific implementations.

The DTD ID is then used to build an XML form, here implemented as an XML DOM node tree object with attributes representing queries to be contained in the form, 102.

In A4 the form is then filled in by giving relevant attributes the appropriate values as will be further illustrated below, 103. Subsequently the XML DOM node tree object, i.e. the filled-in form in object form, is transformed to an XML transport string, e.g. using an XSLT, XSL style sheet, (Extensible Style Sheet Language), 104. The tagged XML node tree (i.e. tagged in that the attributes and element data are given values, e.g. get) is sent as an XML transport string to providing application B4, 105. On the providing side, i.e. on the side of B4, the XML transport string is parsed to an XML object using XML DOM parser, 106. On the providing side the request of the XML form is also converted to a database call, e.g. of SQL format (Structured Query Language), which is sent to the relevant database holding the information, 107. From the database, the requested information is then returned to B4, 108. The retrieved information is filled in on the XML DOM node tree (form) by giving the attributes and element data the appropriate values according to the information from the database, 109. This will be further described below.

Subsequently the XML node tree object (form) is transformed to an XML transport string, e.g. using an XSLT as discussed above, 110. The XML transport string is returned to the requesting side comprising the requesting application A4, 111.

In an alternative implementation the XML form is implemented and transported as a string. The steps relating to establishment of an agreement and creation of a DTD agreement (DTD ID) (or finding a DTD agreement) correspond to steps 100, 101 of Fig. 5.

The DTD agreement is here used to implement an XML form as a string with attributes representing queries to be contained in the form. In the requesting application the form is filled in by giving (assigning) values to the selected/relevant attributes (the appropriate values relating to the information to be requested). The XML tree form, tagged in the described manner, is then sent (as a string) to the providing application, wherein the request of the tagged XML string is converted to a database call of SQL format, using a SAX parser (SAX is Simple API for XML, which is an event based Application Programming Interface as opposed to the object based API as discussed with reference to Fig. 5). The SQL request is sent to the relevant database holding the requested information. When the information has been retrieved by the database, it is transferred to and received by, the providing application. The XML form is filled in (using SAX parser) with the requested information by giving the attributes and element data the appropriate values according to or corresponding to the retrieved information. The completed, i.e. filled in, XML form is then returned to the requesting application as an XML string.

The providing and/or requesting application in communication with the information holding means (DB) would need to be customized to different database structures with different content, which is a problem as referred to above.

A particular problem further arises when there is to be a transformation to e.g. an SQL statement/command when an XML form string has been parsed to an XML DOM node tree. This is due to the fact that the combination of attribute values and node element names have to be transformed to SQL statements/commands. In an XML string embodiment, i.e. there is no DOM node tree implemented, a transformation to SQL statements is also necessary. In this case, a step of searching in the XML string for the appropriate element (tag) is necessary in order to determine where in the string to insert the information obtained from the database. The most difficult topic in this respect is to return the answer (i.e. the reply to the request from the information holding means, e.g. the database) back to the appropriate location in the XML DOM node tree. This is solved as follows below.

Fig. 6 shows, in an explanatory manner, an XML DOM node tree and a database. The XML DOM node tree comprises, in a conventional manner, a root node, element nodes and attribute nodes. For the transformation to an SQL statement in the transforming means, XSLT is used implementing XPath for the LP (LocationPath) as a pointer. The rules for how this is done, are built in XSLT (i) . It is a prerequisite that the structure of the XML file is known (e.g. from XML validation as explained above), but the contents of the attributes and the elements are not known. This means that a number of XSLT style sheets are available, and that depending on DTD, one of them is selected.

Thus, during the transformation step XSLT is used together with XPath. The result of the transformation will be a transformed string or a target string with Location Path information and generated SQL statements. For a GET operation, the Location Path information indicates where in the XML DOM node tree the information data retrieved from the information holding means (e.g. database) shall be inserted. SQL statements specify how to retrieve the information from the information holding means (e.g. database). For a SET operation, the Location Path information indicates where, in the XML DOM node tree, information to be set in the information holding means should be fetched. SQL specifies how to set information in the information holding means.

During the XSLT transformation a matching with "get" or "set" attribute values in the absolute element/node path (i.e. Location Path information) is implemented by means of the XPath syntax. XPath is used to find the appropriate node element. The matched "get" or "set" attribute values in the node elements enables that a generic variable name (user name) in one and the same target string can be added, (ii), to SQL statements/commands.

The completed transformed target string will contain the XPath syntax of the path to the relevant element node, thus representing the navigation for the reply data that is to be returned to, and put into, the element/text node concerned. The relevant part of the program code then uses the SQL statements/commands and translates the generic variable names into real variable names obtained as out of band information. Thus, as the document is transformed into SQL, the Java class for the document transformed to is used over JDBC to the database, iii, iv. Thus, all "tagged variables" are exchanged and replaced by real variables, then the program operating on the target string file, with row by row, "path out" the SQL command and LP, operating on the file resulting from the XSLT transformation.

Particularly a replacement tag is used to define the ID of the user, here called user B. This is called a user B ID replacement tag (generic variable name). As referred to above, the user B ID is added through replacing the ID as given in the replacement tag. As referred to above, this is obtained as out of band information (user B ID). Subsequently the reply is returned to the XML DOM node tree (v) through implementing LocationPath navigation, and the appropriate node (text node) can be found using the XPath syntax of the path.

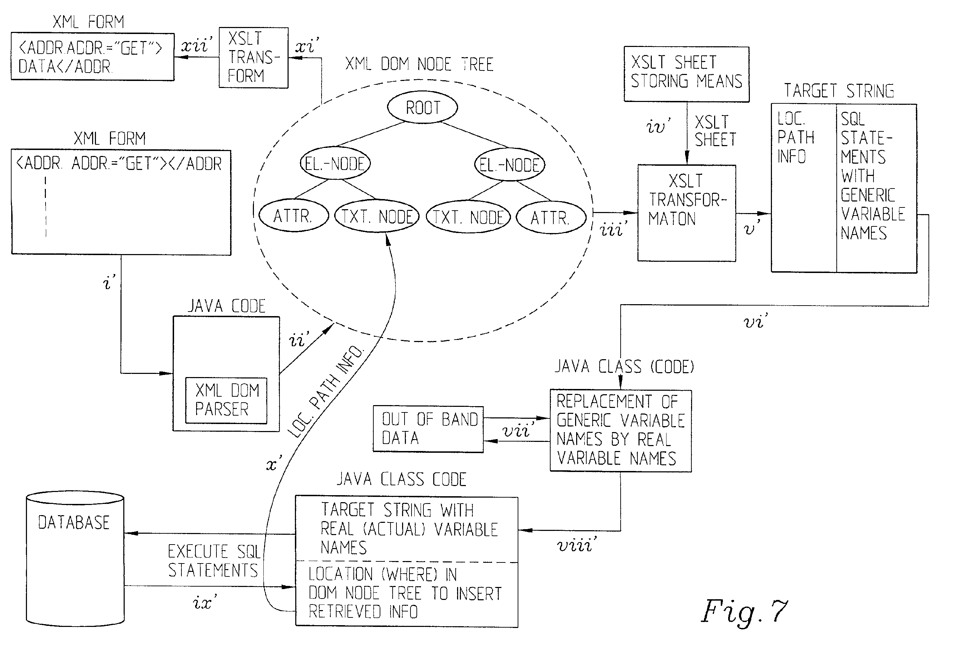

Fig. 7 shows the procedure for a GET operation, e.g. for getting the address of someone, using the inventive concept. It is here supposed that an XML form is received in a providing application (from a requesting application with the terminology used above). The providing application is the application communicating with the information holding means, here e.g. a database. In the figure Address="get" is an attribute, get is an argument, and the element data (text node) is to be inserted between > <. The form is provided, *i*', to an XML DOM parser parsing it to an XML DOM node tree, *ii',* with a root, element nodes, text nodes, attributes etc. The request is then to be operated on by JAVA code to perform an XSLT transformation as explained above, *iii'*. For that purpose the appropriate XSLT sheet (depending on DTD) is fetched from XSLT sheet storing means, and provided, *iv'*, to the XSLT transforming means. This results in a target string, *v'*, with Location Path information and SQL statements with generic variable names (tags). This can also be denoted an input target string.

Java class code then operates on the input target string (with generic variable names) to replace said generic variable names by real variable names "values", *vi'*. Real variable names are obtained as out of band data, *vii'*. This results in an output target string with real variable names. (This means that e.g. a user B replacement tag has been replaced by the real user B ID.) SQL statements are then executed using JAVA class program code, *viii',* comprising two parts as indicated by the dashed line in the figure, one using the target string with actual, real, variable names for the execution of the SQL statements, *ix'*, and one to provide Location Path information relating to where (Location) in the XML DOM node tree the retrieved information should be inserted. The Location Path information is then used, *x'*, to insert the retrieved information in the relevant node. Via an XSLT transformation the retrieved information (data) is then provided into the form, *xi*', *xii*'.

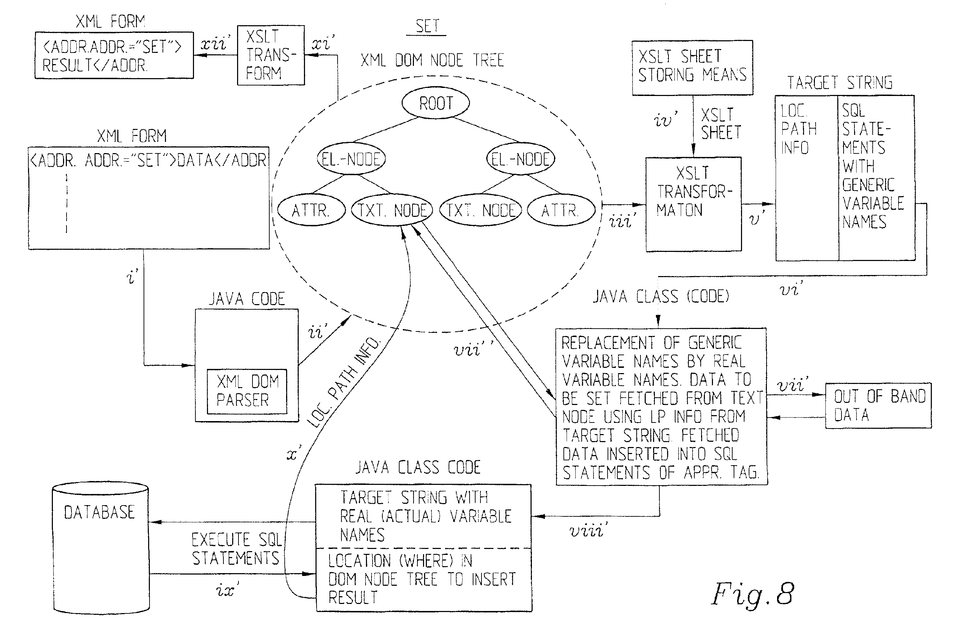

Fig. 8 is a figure similar to Fig. 7, but instead showing the procedure for a SET operation, e.g. for setting the address of someone, according to the inventive concept. It is here supposed that an XML form is received in a providing application (from a requesting application, cf. corresponding procedure for a GET operation). The providing application here is supposed to communicate with the information holding means, e.g. a database. In Fig. 8 Address = "set" is an attribute, set is an argument and the element data (text node) is set between > <, >data<, wherein data is the data fetched from the text node and to be set in the database, e.g. the actual address. As in the GET case, the form is provided, *i'*, to an XML DOM parser parsing it to an XML DOM node tree, *ii',* with a root, element nodes, text nodes, attributes etc. The request will then be operated on by Java code to perform an XSLT transformation as explained above, *iii'.* For that purpose the appropriate XSLT sheet (depending on DTD) is fetched from XSLT sheet storing means, and provided, *iv'*, to the XSLT transforming means.

The transformation will provide a target string, *v'*, with Location Path information and SQL statements with generic variable names (tags). This can be denoted an input target string.

Java class code then operates on said input target string (with generic variable names) to replace the generic variable names by real variable names. This will result in an output target string with real variable names (values), *vi*'. Real variable names are obtained as out of band data, *vii*'. (This means that e.g. a user B replacement tag has been replaced by the real user B ID.) Data to be set is fetched from the text node using Location Path information from the target string. The fetched data is inserted into SQL statements of the appropriate tag, *vii*'', e.g. ValueToReplace. The appropriate tag may e.g. be found by searching in the SQL statements for an SQL replacement tag where the data is to be inserted.

SQL statements are then executed using Java class program code, *viii',* comprising two parts as indicated by the dashed line in the figure 8, one using the target storing with actual, real, variable names for the execution of the SQL statements, *ix'*, and one to provide Location Path information relating to where (Location) in the XML DOM node tree the data (e.g. the result) should be inserted. The Location Path information is then used, *x'*, to insert the result in the relevant node. The result may e.g. relate to the result of the performed operation, e.g. "O.K." if it was successful. By means of an XSLT transformation, this is then provided in the form, *xi', xii'.*

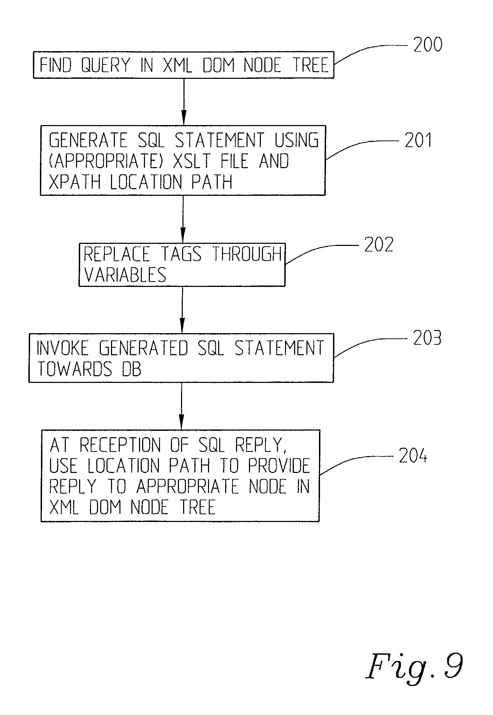

In the flow diagram of Fig. 9 the main functional steps are indicated. It is first supposed that the request (the query) is found in the XML DOM node tree (cf. Fig. 6), 200.

In the transforming means, e.g. a component of the "providing" application, an XSLT file (the appropriate or selected XSLT file as more thoroughly evaluated earlier) is used to generate an SQL statement. Through the use of XPath, the Location Path (LP) is established, 201. Then tags are replaced through real variables, 202.

Subsequently the generated SQL statement is invoked towards the information holding means, e.g. a database, 203. When the return information is received (in the transforming means) from the database, LP is used to furnish the return (reply) data information to the appropriate (text) node of the XML DOM node tree, 204, i.e. to the appropriate location of the XML DOM node tree.

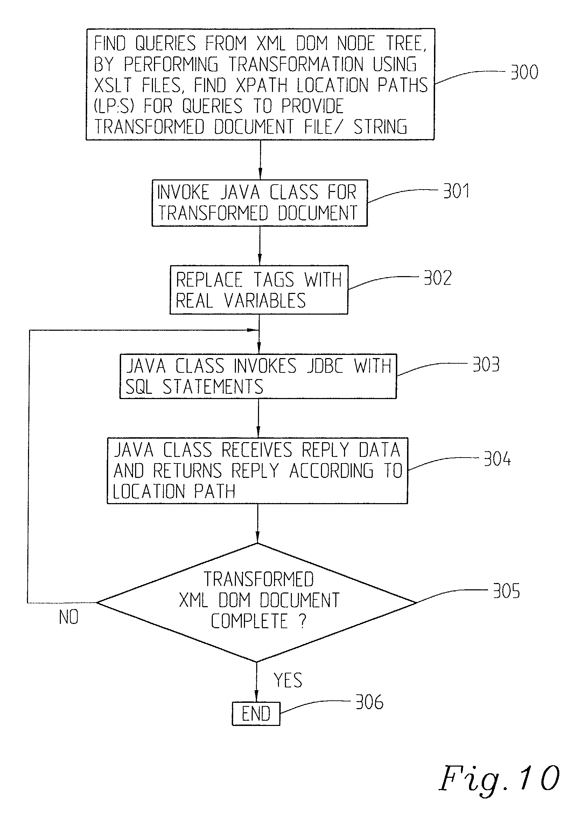

Fig. 10 is a flow diagram similar to that of Fig. 9 but showing the steps somewhat more in detail. In the first step, 300, the queries from the DOM node tree are found, a transformation is performed using XSLT files and XPath LPs for queries are found, in order to provide a transformed document file/string. In a particular implementation Java™ class is invoked, for the transformed document, 301, cf. also Figs. 6,7.

Tags are then replaced through real variables, 302. The Java class then invokes the database over JDBC with SQL statements, 303.

Reply data is then received by the Java class, which also is used to return the reply data to the appropriate location of the XML DOM node tree, according to Location Path, 304.

It is then examined if the transformed XML DOM document is complete, 305. If yes, the procedure is completed, otherwise steps 303, 304 are repeated until the transformed DOM document is complete. The procedure then ends, 306.

According to the invention, irrespectively of which is the database, neither a providing, nor a requesting application (which also may be the same) needs to be adapted to the database structure, all that is required is the provisioning (finding), or writing, of another or a new XSLT, and using Location Path information with the request. This is extremely advantageous.

Therefore no hardcoded links are required as initially referred to. Location Path is not known for being used for such purposes, but e.g. for converting between XML files.

Below an example of a request document in the form of an XML form as discussed earlier in the application is shown.

### Example of an XML form for a "Get" operation:

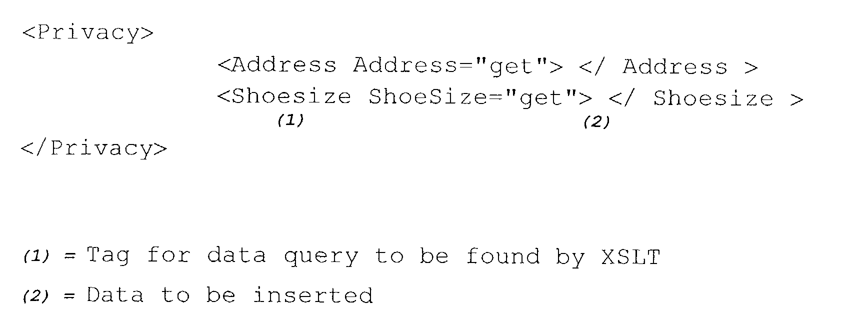

An XSLT transformation file may be as follows:

### The XSLT transformation file

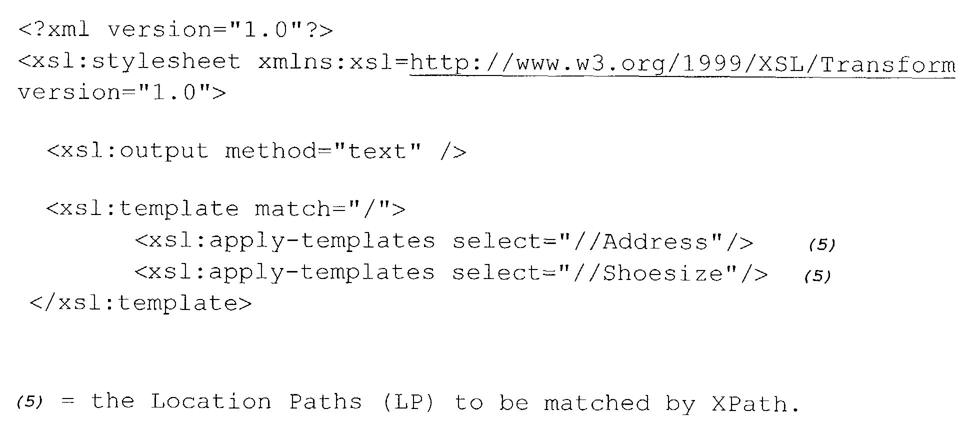

### The XSLT transformation file (SQL select)

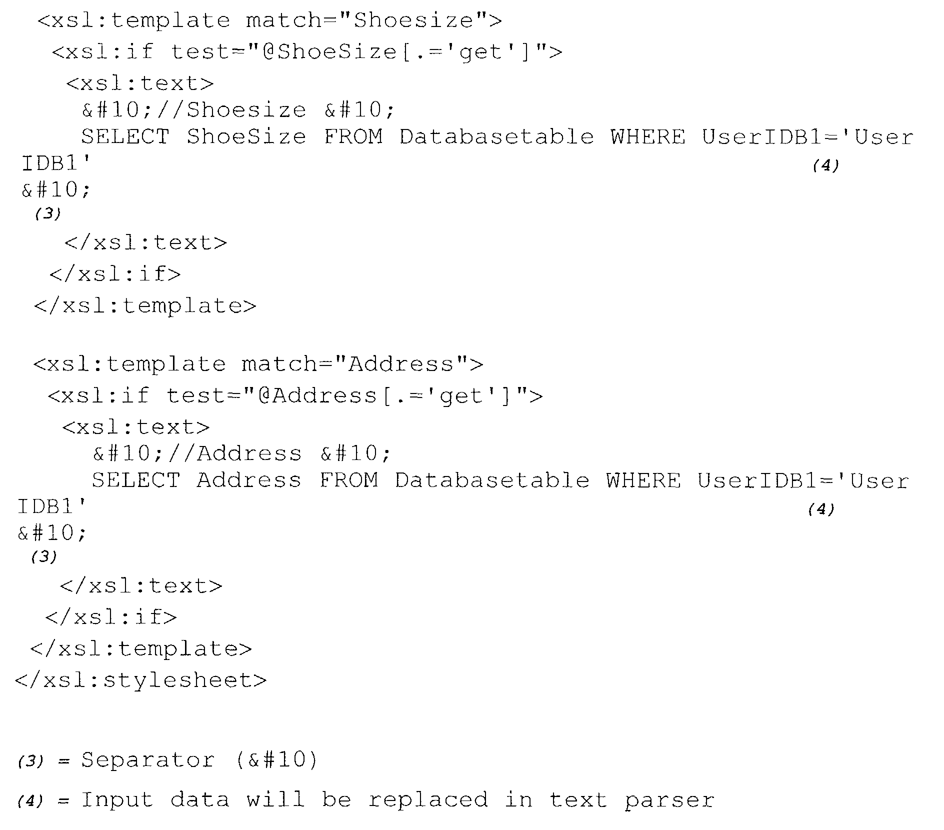

Below is shown an

### Example of an XML form for "Set"

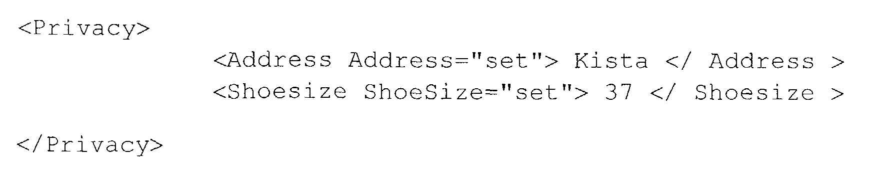

and subsequently a continuation of the XSLT transformation file, the XSLT transformation file (SQL update).

**The XSLT transformation file (SQL update)**

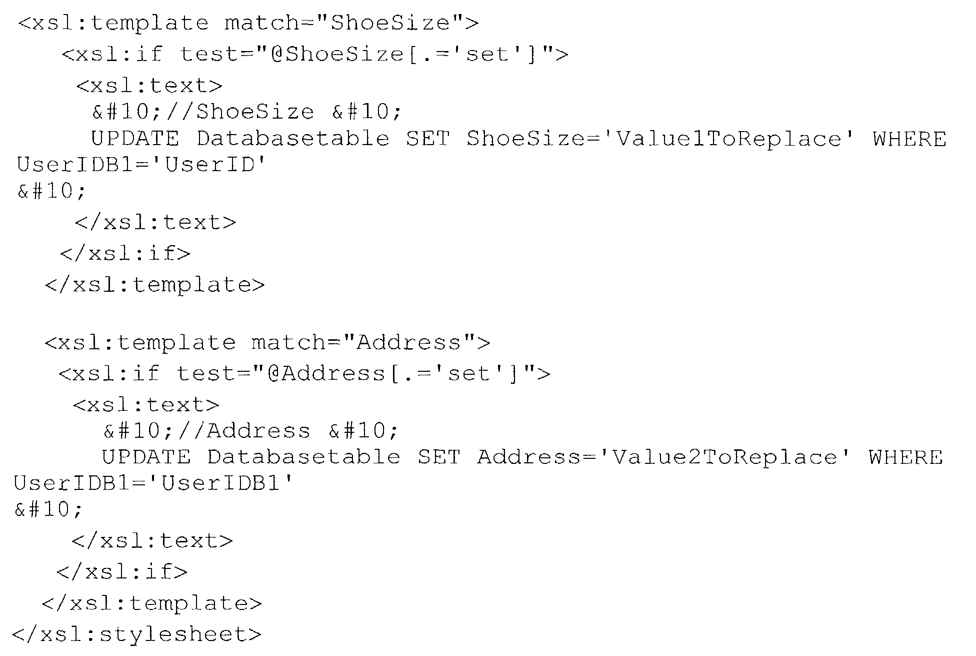

ValueToReplace (1),(2) must be so selected that they can be searched for, and the information from the XML tree can be input there.

It should be clear that these examples on XML forms and XSLT transformation files merely are given for explanatory and exemplifying reasons. Also in other respects the invention is of course not limited to the specifically illustrated embodiments, but, on the contrary, it can be varied in a number of ways without departing from the scope of the appended claims.

## Claims

1. A system for, in an environment comprising distributed applications and service/information/content providers or information holding means, providing communication between a requesting system with a protocol supporting a generic markup language and an information holding means,
**characterized in**
**that** a distributed application comprises, or is associated with, means for transforming/ converting a request in the form of a document, in the generic markup language, to an information holding means, to an access request using an access protocol for access of the information holding means associated with a pointer to a location in the document in the generic markup language representing the request, that said information holding means access request is invoked as a conventional query to the information holding means, and in that said transforming/converting means returns the reply related to the information holding means access request to the appropriate location in the request document, as given (indicated) by the pointer, such that data can be obtained from the information holding means independently of the structure and content of the information holding means.

2. A system according to claim 1,
**characterized in**
**that** the generic markup language is XML.

3. A system according to claim 2,
**characterized in**
**that** the document comprises an XML DOM node tree document.

4. A system according to claim 3,
**characterized in**
**that** the XML structure is known by the transforming means but that the content of the attribute and attribute values of the DOM node tree are unknown.

5. A system according to claim 4,
**characterized in**
**that** an XSLT transformation file is used to generate the information holding means access query which is connected to/associated with the pointer.

6. A system according to claim 5,
**characterized in**
**that** the pointer comprises an XPath pointer, XPath Location Path.

7. A system according to claim 5 or 6,
**characterized in**
**that** the pointer comprises an XML DOM element name.

8. A system according to claim 5,6 or 7,
**characterized in**
**that** the information holding means access request is generated using an XSLT file and XPath Location Path and in that after execution of the generated information holding means access request, the reply is returned to the appropriate location (node) in the XML DOM node tree using Location Path (LP) navigation.

9. A system according to claim 8,
**characterized in**
**that** the request is received by an information providing application from an information requesting application as an XML transport string which on the providing side in communication with the information holding means is parsed to an XML object using XML DOM parser.

10. A system according to claim 8,
**characterized in**
**that** the request is received by an information providing application from an information requesting application as a tagged XML transport string, and in that the request of the tagged XML string is transformed/converted for a call to an information holding means.

11. A system according to claim 8,
**characterized in**
**that** one and the same information holding means access request/query is used for different data elements of one and the same information holding means, e.g. database, table, in order to increase the performance for information requests/answers.

12. A system according to claim 9,
**characterized in**
**that** it is used in a privacy protection network and in that the document comprises an XML form created on the requesting node using information on an agreement, e.g. a DTD forwarded to the information providing side as an XML form (string), which form is filled in after retrieving the data from the information holding means by means of the information holding means access request and returned to the appropriate location in the DOM node tree/string of the providing application.

13. A system according to any one of claims 5-12,
**characterized in**
**that** the XML DOM node tree document is validated against a DTD or a scheme stored in the converting means.

14. A system according to any one of claims 8-12,
**characterized in**
**that** the XML DOM node tree is transformed using a selected XSLT file as given by a DTD ID and in that XSLT and XPath strings/files are implemented to provide for the transformation.

15. A system according to claim 13 or 14,
**characterized in**
**that** Java™ is used for invoking the information holding means over JDBC with the information holding means access request/statement and in that the Java™ class accessing the data uses Location Path to return the reply data to the relevant node in the XML DOM node tree.

16. A system according to any one of the preceding claims,
**characterized in**
**that** XPath syntax is used to provide matching with "get" or "set" attribute values of the absolute node element path and in that through the matched attribute values generic variable names can be added to the information holding means access request statements/commands in one and the same transformed string or target string.

17. A system according to any one of the preceding claims,
**characterized in**
**that** the SQL is used for the information holding means access request.

18. A system according to any one of claims 1-16,
**characterized in**
**that** LDAP is used for the information holding means access request.

19. A system at least according to claim 9 and 16,
**characterized in**
**that** the generic variable names are translated by program code to real names obtained from out of band data received from the information providing application.

20. A method for, in an environment comprising distributed applications, providing communication between a system with a protocol supporting a generic markup language and an information holding means,
**characterized in**
**that** it comprises the steps of:
- providing/receiving a request document in the generic markup language to/in converting/transforming means comprised by or associated with an application;
- transforming/converting the request to an information holding means access request using an information holding means access protocol/language associated with a pointer to the appropriate location in the request document in the generic markup language and representing the request;
- invoking the information holding means access request as a conventional query to the information holding means;
- returning the reply data related to the query to the appropriate location in the request document as given by the pointer, such that information data can be obtained and appropriately allocated from an information holding means independently of structure and content of said information holding means.

21. A method according to claim 20,
**characterized in**
**that** the generic markup language is XML and in that the request document comprises an XML DOM node tree for which the content of elements and attributes are not known.

22. A method according to claim 21,
**characterized in**
**that** the transforming/converting step comprises:
- finding/selecting an XSLT;
- performing the transformation using the found/selected XSLT;
- using XPath Location Path as a pointer functionality to establish the location, e.g. a node element of the XML DOM node tree;
- adding the XPath pointer (syntax) of the node element path to the information holding means access request to provide a target string comprising information about the return location (node) for the reply information data;
- returning the reply back to the relevant location (node) of the XML DOM node tree using the XPath pointer.

23. A method according to claim 22,
**characterized in**
**that** it comprises the step of, during the transforming step:
- using XPath for matching with "get" or "set" attribute values relating to the path of the absolute node element of the XML DOM node tree to provide a generic variable name;
- adding the generic variable name to the information holding means access request thus providing a common (single) transformed string or a target string.

24. A method according to claim 23,
**characterized in**
**that** it further comprises the steps of:
- using the generic variable name as a replacement tag for the user ID of the providing side;
- obtaining the ID of the providing side user as out of band information;
- replacing the generic variable name of the replacement tag by the real ID obtained as out of band information for accessing the appropriate record in the information holding means to retrieve the requested information, and
- using Location Path information for navigating the return (reply) data to the appropriate node in the XML DOM node tree.

25. A method according to any one of claim 22-24,
**characterized in**
**that** it comprises the step of:
- concatenating a number of information holding means access request statements/commands to one access request statement/command, thereby storing the XPath syntax, e.g. in a storing means in a storing array, in order to increase the performance when requesting information and obtaining the requested information.

26. A method according to any one of claims 20-25,
**characterized in**
**that** it is used in a privacy protection network, an XML form being created on a requesting application side for requesting information via a providing application fetching said information from the information holding means.

27. A method according to any one of claims 20-26,
**characterized in**
**that** for the information holding means access request SQL is used, thus providing an SQL statement/command.

28. A method according to any one of claims 20-26,
**characterized in**
**that** LDAP is used for the information holding means access request.

29. A method according to any one of claims 20-28,
**characterized in**
**that** the information holding means comprises a database (DB).
